# EUROPÄISCHE PATENTSCHRIFT

(11) **EP 2 205 459 B1**
(45) Veröffentlichungstag und Bekanntmachung des Hinweises auf die Patenterteilung: **05.08.2015**
(21) Anmeldenummer: 08848229.4
(22) Anmeldetag: 06.11.2008
(51) Int. Cl.: B60K 17/28

(54) **GETRIEBE MIT NEBENANTRIEB**
TRANSMISSION HAVING AUXILIARY DRIVE
TRANSMISSION COMPORTANT UNE COMMANDE AUXILIAIRE

(30) Priorität: 10.11.2007 DE 102007053674
(43) Veröffentlichungstag der Anmeldung: 14.07.2010
(73) Patentinhaber: Daimler AG, 70327 Stuttgart (DE)
(72) Erfinder: STEFFENS, Frank, 73760 Ostfildern (DE)
(74) Vertreter: JENSEN & SON
(86) Internationale Anmeldenummer: PCT/EP2008/009331
(87) Internationale Veröffentlichungsnummer: WO 2009/059757

(56) Entgegenhaltungen:
- WO-A-2005/058629
- DE-C- 1 287 941
- GB-A- 2 206 852

## Beschreibung

Die Erfindung betrifft ein Getriebe mit Nebenabtrieb.

Getriebe mit einem Nebenabtrieb werden in Nutzfahrzeugen verwendet, bei denen die Antriebsmaschine nicht nur dem Fahrbetrieb dient, sondern auch dem Antrieb von Zusatzaggregaten. Solche Zusatzaggregate können Aggregate sein, die im Fahrbetrieb eingesetzt werden, aber auch solche, die vom Fahrbetrieb unabhängig eingesetzt werden. So sind beispielsweise aus dem Bereich der Nutzfahrzeuge Baustofftransportfahrzeuge bekannt, bei denen die Antriebsmaschine auch dazu verwendet wird, eine Baustoffpumpe, beispielsweise eine Betonpumpe anzutreiben. Auch Bohrgeräte von Erkundungsfahrzeugen oder Hydraulikaggregate und Generatoren können als Zusatzaggregate mit der Antriebsmaschine eines Nutzfahrzeuges angetrieben werden.

Aus der Praxis bekannte Getriebe mit Nebenabtrieb stellen die gewünschte Leistung über eine Nebenabtriebswelle zur Verfügung, wobei diese Nebenabtriebswelle ein Teil eines Getriebes mit Nebenabtrieb ist.

Ein aus der Praxis bekanntes Getriebe mit Nebenabtrieb der Anmelderin, von dem der Oberbegriff des Anspruches 1 ausgeht, weist neben einer Eingangswelle, die an das Schwungrad einer Antriebsmaschine angeschlossen wird, eine Zwischenwelle, eine Schaltgetriebewelle, eine Nebenabtriebswelle, eine Getriebeeingangskupplung, eine Zwischenkupplung und eine Nebenabtriebskupplung auf. Bei diesem Getriebe wird die Zwischenwelle mit der Eingangswelle über eine Getriebeeingangskupplung verbunden, wobei diese Getriebeeingangskupplung auch die Fahrkupplung ist. Ferner wird bei diesem Getriebe die Schaltgetriebewelle mit der Zwischenwelle über eine Zwischenkupplung verbunden.

Um die Nebenabtriebswelle zuschalten zu können, ist die Nebenabtriebskupplung als synchronisierende Kupplung, insbesondere als Lamellenkupplung ausgebildet, wobei die Nebenabtriebskupplung an einer Welle angreift, welche permanent von der Eingangswelle angetrieben ist. Insbesondere dann, wenn über die Nebenabtriebswelle die volle Leistung des Abtriebsaggregates zur Verfügung gestellt werden soll, werden an die Nebenabtriebskupplung hohe Anforderungen gestellt, so dass ein Getriebe mit einem solchen Nebenabtrieb sehr aufwendig ist.

In der gattungsgemäßen DE 1287941 ist ein Zahnräderwechselgetriebe in Gruppenbauart mit Nebenabtrieb für landwirtschaftliche Schlepper beschrieben, in welchem der Nebenabtrieb von der Abtriebswelle des Zahnräderwechselgetriebes angetrieben wird. Das Zahnräderwechselgetriebe kann nicht für einen fahrunabhängigen Antrieb des Nebenabtriebs im Stillstand des Fahrzeugs abgekoppelt werden, um eine Getriebeeingangskupplung des Zahnräderwechselgetriebes dann für einen Antrieb des Nebenabtriebs verfügbar zu machen.

Der Erfindung liegt die Aufgabe zugrunde, den Aufwand zur Herstellung eines Getriebes mit Nebenabtrieb zu verringern.

Die Lösung dieser Aufgabe erfolgt erfindungsgemäß mit den Merkmalen des Anspruchs 1.

Gemäß der Erfindung ist bei einem Getriebe mit Nebenabtrieb, mit einer Eingangswelle, einer Zwischenwelle, einer Schaltgetriebewelle, einer Nebenabtriebswelle, einer Getriebeeingangskupplung, einer Zwischenkupplung und einer Nebenabtriebskupplung vorgesehen, dass die Nebenabtriebskupplung im Momentenfluss hinter der Getriebeeingangskupplung angeordnet ist. Damit erlaubt es die Erfindung, die Nebenabtriebskupplung ein aufzubauen, denn ein Schalten - auch unter Last - kann auf dieser Weise mit der Getriebeeingangskupplung erfolgen. Die Nebenabtriebskupplung ist als Klauenkupplung ausgeführt, mittels welcher eine Welle mit der Zwischenwelle direkt verbindbar ist, wobei die Welle einer Lagerung oder Befestigung eines Eingangselements des Nebenabtriebs dient. Eine solche Ausgestaltung ist nicht nur extrem einfach, sondern sie weist auch einen sehr geringen Verschleiß auf.

Insbesondere ist die Nebenabtriebskupplung als nicht-synchronisierende Kupplung ausgeführt. Dadurch wird der Aufwand zur Herstellung eines Getriebes mit Nebenabtrieb weiter verringert.

Gemäß einer bevorzugten Ausgestaltung der Erfindung weist das Getriebe nur eine Kupplung auf, welche als Unabhängigkeitsklaue ausgeführt ist, mittels welcher nach einem Anfahren des Nebenabtriebs die Getriebeeingangskupplung und die Zwischenwelle von der Last des Nebenabtriebs freischaltbar ist, womit diese wieder für einen Fahrbetrieb verwendbar sind. Die Unabhängigkeitsklaue wirkt mit der Eingangskupplungsnebenwelle zusammen.

Ein besonders einfacher und damit auch kostengünstiger Aufbau eines erfindungsgemäßen Getriebes ergibt sich, wenn - wie gemäß einer weiteren bevorzugten Ausgestaltung der Erfindung vorgesehen - die Nebenabtriebskupplung eine 3-Stellungsklaue aufweist, in der die Funktionen einer Klauenkupplung und einer Unabhängigkeitsklaue zusammengefasst sind.

Die Vorteile der Erfindung lassen sich auch durch einen Umbau vorhandener Getriebe erzielen, wenn dabei ein Nebenabtriebsadapter gemäß einem weiteren Aspekt der Erfindung eingebaut wird, bei dem in oder an einem Adaptergehäuse zur Aufnahme eines Nebenabtriebsräderwerks eine Nebenabtriebskupplung vorgesehen ist, die im Momentenfluss hinter der Getriebeeingangskupplung angeordnet ist. Die sich dadurch ergebenden Vorteile sind die gleichen wie bei dem erfindungsgemäßen Getriebe, so dass auch für einen solchen Nebenabtriebsadapter unabhängig Schutz beansprucht wird. Ein solcher Nebenabtriebsadapter ist gemäß besonders bevorzugter Ausgestaltungen gemäß den Merkmalen der Unteransprüche des Getriebes ausgestaltet.

Weitere vorteilhafte Ausgestaltungen und Weiterbildungen der Erfindung ergeben sich aus den Unteransprüchen sowie aus der Beschreibung im Zusammenhang mit den Zeichnungen.

Dabei zeigen:
- Fig. 1: eine erste bevorzugte Ausführungsform eines erfindungsgemäßen Getriebes mit Nebenabtrieb und
- Fig. 2: eine zweite bevorzugte Ausführungsform eines erfindungsgemäßen Getriebes mit Nebenabtrieb.

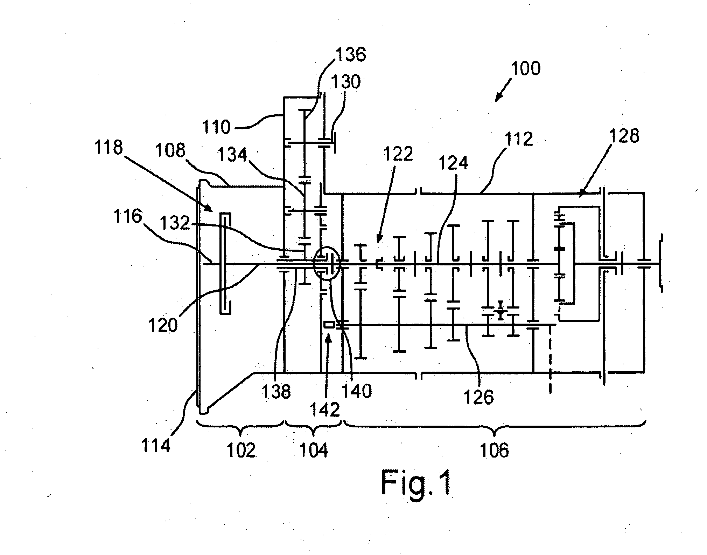

Die in Fig. 1 gezeigte erste bevorzugte Ausführungsform eines Getriebes 100 mit Nebenabtrieb umfasst einen Eingangskupplungsabschnitt 102, einen Nebenabtriebsadapter 104 und einen Schaltgetriebeabschnitt 106. Zu diesen Abschnitten korrespondieren Gehäuseabschnitte, nämlich ein Eingangsgehäuse 108, ein Adaptergehäuse 110 sowie ein Schaltgetriebegehäuse 112.

Das Getriebe 100 ist im eingebauten Zustand mit seinem Eingangsgehäuse 108, welches einen Kupplungsflansch 114 aufweist, an eine Antriebsmaschine (nicht gezeigt) derart angeflanscht, dass eine Eingangswelle 116 des Getriebes 100 mit dem Schwungrad der Antriebsmaschine verbunden ist. Hinter der Eingangswelle 116 ist eine Getriebeeingangskupplung 118 angeordnet, mittels welcher eine Zwischenwelle 120 mit der Eingangswelle 116 verbindbar ist.

Die Zwischenwelle 120, die an der Getriebeeingangskupplung 118 angreift, erstreckt sich durch den Eingangsabschnitt 102 und den Nebenabtriebsadapter 104 in den Schaltgetriebeabschnitt 106, in welchem eine Zwischenkupplung 122 angeordnet ist. Mit der Zwischenkupplung 222 ist die Zwischenwelle 120 mit einer Schaltgetriebewelle 124 verbindbar ist. Neben der Schaltgetriebewelle 124 weist der Schaltgetriebeteil 106 eine Vorlegewelle 126 sowie eine Rangegruppe 128 auf, wobei allerdings der Schaltgetriebeteil 106 in herkömmlicher Weise aufgebaut ist.

Der Nebenabtriebsadapter 104 dient der Bereitstellung einer Leistung an einer Nebenabtriebswelle 130, welche seitlich versetzt zu der Eingangswelle 116, der koaxial damit angeordneten Zwischenwelle 120 und der damit wiederum koaxial angeordneten Schaltgetriebewelle 124 angeordnet ist. Die Nebenabtriebswelle ist dabei 3° zu den vorgenannten Wellen geneigt.

Zum Antrieb der Nebenabtriebswelle 130 ist ein Räderwerk mit einem Eingangsrad 132, einem Zwischenrad 134 und einem Ausgangsrad 136 vorgesehen. Dabei ist das Ausgangsrad 136 drehfest auf der Nebenabtriebswelle 130 angeordnet, und das Eingangsrad 132 ist auf einer Hohlwelle 138 gelagert, welche sich in radialer Richtung auf der Zwischenwelle 120 abstützt.

Um die Hohlwelle 138 und damit über den Rädertrieb die Nebenabtriebswelle 130 anzutreiben, ist eine Nebenabtriebskupplung 140 vorgesehen, welche als Klauenkupplung ausgebildet ist.

Soll mit dem in Fig. 1 gezeigten Getriebe 100 über die Nebenabtriebswelle 130 ein Zusatzaggregat angetrieben werden, wird bei geöffneter Zwischenkupplung 122 zunächst die Getriebeeingangskupptung 118 ausgekuppelt. Somit ist die Zwischenwelle 120 antriebslos, und diese kann über eine Vorlegewellenbremse 142 zum Stillstand gebracht werden. In diesem Zustand ist es problemlos möglich, die Nebenabtriebskupplung 140 einzukuppeln. Anschließend an ein einkuppeln der Nebenabtriebskupplung 140 kann dann die Getriebeeingangskupplung 118 eingekuppelt werden, womit die volle Leistung der Antriebsmaschine an der Nebenabtriebswelle 130 zur Verfügung steht.

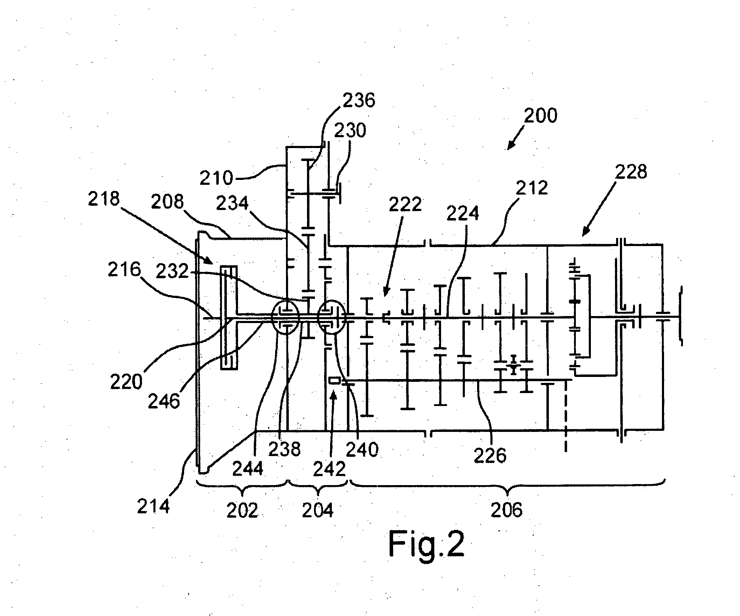

Die in Fig. 2 gezeigte zweite bevorzugte Ausführungsform eines erfindungsgemäßen Getriebes 200 mit Nebenabtrieb stimmt in wesentlichen Elementen mit der ersten Ausführungsform überein, so dass für Teile des Getriebes 200, die Teilen des Getriebes 100 gemäß der ersten Ausführungsform gleichen, Bezugszeichen verwendet worden sind, die gegenüber der ersten Ausführungsform um 100 erhöht sind. Auf die Beschreibung der entsprechenden Teile im Zusammenhang mit der ersten Ausführungsform wird hiermit ausdrücklich Bezug genommen.

Wie das Getriebe 100 weist das Getriebe 200 mit Nebenabtrieb einen Eingangskupplungsabschnitt 202, einen Nebenabtriebsadapter 204 sowie einen Schaltgetriebeabschnitt 206 auf, zu welchem wiederum ein Eingangsgehäuse 208, ein Adaptergehäuse 210 sowie ein Schaltgetriebegehäuse 212 korrespondieren: Mit einem Kupplungsflansch 214 ist das Eingangsgehäuse 208 an einer Antriebsmaschine (nicht gezeigt) derart angeschlossen, dass eine Eingangswelle 216 des Getriebes 200 mit dem Schwungrad der Antriebsmaschine verbunden ist. Hinter der Eingangswelle sind wiederum eine Getriebeeingangskupplung 218 und eine Zwischenwelle 220 angeordnet. Die Zwischenwelle 220, die an der Getriebeeingangskupplung 218 angreift, erstreckt sich durch den Eingangskupplungsabschnitt 202 und den Adapter 204 in den Schaltgetriebeabschnitt 206, in welchem wiederum eine Zwischenkupplung 220 angeordnet ist. Mit der Zwischenkupplung 222 ist die Zwischenwelle 220 mit einer Schaltgetriebewelle 224 verbindbar. Neben der Schaltgetriebewelle 224 weist auch der Schaltgetriebeteil 206 des Getriebes 200 gemäß der zweiten Ausführungsform eine Vorlegewelle 226 sowie eine Rangegruppe 228 auf, die in herkömmlicherweise aufgebaut sind.

Wie bei der ersten Ausführungsform dient der Nebenabtriebsadapter 204 der Bereitstellung einer Leistung an einer Nebenabtriebswelle 230, welche wie bei der ersten Ausführungsform seitlich versetzt und zu dem zuvor genannten Wellen um 3° geneigt angeordnet ist.

Zum Antrieb der Nebenabtriebswelle 230 ist wiederum ein Räderwerk mit einem Eingangsrad 232, einem Zwischenrad 234 und einem Ausgangsrad 236 vorgesehen, wobei die Räder 132, 134, 136 wie bei der ersten Ausführungsform angeordnet und die gelagert sind.

Anders als bei der ersten Ausführungsform sitzt das Eingangsrad 132 jedoch auf einer Hohlwelle 238, welche nicht nur mit einer Nebenabtriebskupplung 240, die als Klauenkupplung ausgebildet ist, mit der Zwischenwelle 220 kuppelbar ist, die Hohlwelle 238 ist darüber hinaus mittels einer Unabhängigkeitsklaue 244 mit einer Eingangskupplungsnebenwelle 246 drehfest verbindbar. Die Eingangskupplungsnebenwelle 246 ist eine Welle, vorzugsweise eine Hohlwelle, welche verdrehfest mit der Eingangswelle 216 verbunden ist.

Soll mit dem in Fig. 2 gezeigte Getriebe 200 gemäß der zweiten bevorzugten Ausführungsform über die Nebenabtriebswelle 230 ein Zusatzaggregat angetrieben werden, wird bei geöffneter Zwischenkupplung 222 zunächst die Getriebeeingangskupplung 218 ausgekuppelt, womit die Zwischenwelle 220 antriebslos ist. Wie bei der ersten Ausführungsform kann die Zwischenwelle über eine Vorlegewellenbremse 242 zum Stillstand gebracht werden. In diesem Zustand wird zunächst mit der Nebenabtriebskupplung 240, die eine Anfahrklaue aufweist, eine verdrehfeste Verbindung der Hohlwelle 238 mit der Zwischenwelle 220 hergestellt. Anschließend wird die Getriebeeingangskupplung 218 eingekuppelt, womit ein Momentenfluss von der Eingangswelle 216 über die Getriebeeingangskupplung 218, die Nebenabtriebskupplung 240, die Hohlwelle 238, den Rädertrieb 232, 234, 236 auf die Nebenabtriebswelle 230 erfolgt.

In dem vorgenannten Zustand laufen die Hohlwelle 238 und die Eingangskupplungsnebenwelle 246 synchron. Dies erlaubt es, die Unabhängigkeitsklaue 244 einzurücken, womit der Momentenfluss dann auch über die Eingangskupplungsnebenwelle 246 und die Hohlwelle 238 erfolgt. In diesem Zustand kann dann die Anfahrklaue der Nebenabtriebskupplung 240 gelöst werden, und auch die Getriebeeingangskupplung 218 kann gelöst werden. In diesem Zustand erfolgt nun ein Antrieb der Nebenabtriebswelle 230 unabhängig von der Getriebeeingangskupplung 218, welche somit zu einer Verwendung im Fahrbetrieb freigeschaltet ist, womit in bekannterweise ein Zusammenwirken der Getriebeeingangskupplung 218 mit dem Schaltgetriebeabschnitt 206 möglich ist.

Die Erfindung, und insbesondere die erste bevorzugte Ausführungsform des Getriebes 100 bietet zahlreiche Vorteile. So ist es mit der Erfindung möglich, Getriebeserien modular aufzubauen, indem einer oder mehrere Eingangskupplungsabschnitte, einer oder mehrere Schaltgetriebeabschnitte und wahlweise einer oder mehrere Nebenabtriebsadapter miteinander verbindbar zur Verfügung gestellt werden. Dabei werden neben einer standardisierbaren und gegebenenfalls standardisierten Getriebeeingangskupplung nur noch verhältnismäßig einfach ausgebaute weitere Kupplungen und Wellen benötigt. Eine aufwendige synchronisierende Kupplung, insbesondere eine Lamellenkupplung für den Nebenabtrieb kann entfallen. Dafür ist dann auch keine eigene Hydraulikeinheit mehr erforderlich.

Ferner wird es erleichtert, gewünschte Abstände und Winkellagen der Nebenabtriebswelle relativ zur Eingangswelle einzustellen. Insgesamt reduzieren sich die Produktionskosten, und es ist möglich, am Nebenabtrieb höhere Leistungen zur Verfügung zu stellen, wobei auch die Verlustleistungen, die eine separate Lamellenkupplung für den Nebenabtrieb zur Folge hat, zu vermeiden. Ein nicht zu vernachlässigender Vorteil ist ferner die Möglichkeit, den Nebenabtrieb unter Volllast anzufahren.

Darüber hinaus bietet die besonders bevorzugte zweite Ausführungsform die Möglichkeit, einen Hydrostaten am Nebenabtrieb anzuordnen.

## Patentansprüche

1. Getriebe mit Nebenabtrieb, mit einer Eingangswelle (116; 216), einer Zwischenwelle (120; 220), einer Schaltgetriebewelle (124; 224), einer Nebenabtriebswelle (130; 230), einer Getriebeeingangskupplung (118; 218), einer Zwischenkupplung (122; 222) und einer Nebenabtriebskupplung (140; 240), wobei die Zwischenwelle (120; 220) mit der Eingangswelle (116; 216) über die Getriebeeingangskupplung (118; 218) verbindbar ist und wobei die Schaltgetriebewelle (124; 224) mit der Zwischenwelle (120; 220) über die Zwischenkupplung (122; 222) verbindbar ist, wobei die Nebenabtriebskupplung (140; 240) im Momentenfluss hinter der Getriebeeingangskupplung (118; 218) angeordnet ist,
**dadurch gekennzeichnet, dass**
die Nebenabtriebskupplung (140; 240) als Klauenkupplung ausgeführt ist, mittels welcher eine Hohlwelle (138, 238) mit der Zwischenwelle (120, 220) direkt verbindbar ist, wobei die Hohlwelle (138, 238) einer Lagerung oder Befestigung eines Eingangsrades (132, 232) des Nebenabtriebs dient.

2. Getriebe nach Anspruch 1,
**dadurch gekennzeichnet, dass** die Nebenabtriebskupplung eine Unabhängigkeitsklaue (244) aufweist, die mit einer Eingangskupplungsnebenwelle (246) zusammenwirkt.

3. Getriebe nach Anspruch 1,
**gekennzeichnet durch**
eine Kupplung, welche als Unabhängigkeitsklaue (244) ausgeführt ist, mittels welcher nach einem Anfahren des Nebenabtriebs die Getriebeeingangskupplung (218) und die Zwischenwelle (220) von der Last des Nebenabtriebs freischaltbar ist, wobei die Kupplung mit einer Eingangskupplungsnebenwelle (246) zusammenwirkt.

4. Getriebe nach Anspruch 1,
**dadurch gekennzeichnet, dass**
die Nebenabtriebskupplung (140, 240) eine 3-Stellungsklaue aufweist, in der die Funktionen der Klauenkupplung und einer Unabhängigkeitsklaue (244) zusammengefasst sind, wobei mittels der Unabhängigkeitsklaue (244) nach einem Anfahren des Nebenabtriebs die Getriebeeingangskupplung (218) und die Zwischenwelle (220) von der Last des Nebenabtriebs freischaltbar ist und wobei diese Freischaltung alleinig durch die Unabhängigkeitsklaue (244) bewirkbar ist.

## Claims

1. Gearbox with power take-off, comprising an input shaft (116; 216), an intermediate shaft (120; 220), a manual gearbox shaft (124; 224), a power take-off shaft (130; 230), a gearbox input clutch (118; 218), an intermediate clutch (122; 222) and a power take-off clutch (140; 240), wherein the intermediate shaft (120; 220) can be connected to the input shaft (116; 216) via the gearbox input clutch (118; 218), and wherein the manual gearbox shaft (124; 224) can be connected to the intermediate shaft (120; 220) via the intermediate clutch (122; 222), wherein the power take-off clutch (140; 240) is located downstream of the gearbox input clutch (118; 218) in the torque flow,
**characterised in that**
the power take-off clutch (140; 240) is designed as a jaw clutch by means of which a hollow shaft (138, 238) can be directly connected to the intermediate shaft (120; 220), the hollow shaft (138, 238) being used to mount or secure an input gear (132, 232) of the power take-off.

2. Gearbox according to claim 1,
**characterised in that** the power take-off clutch comprises an independent jaw (244) acting together with an input clutch layshaft (246).

3. Gearbox according to claim 1,
**characterised by** a clutch designed as an independent jaw (244), by means of which the gearbox input clutch (118) and the intermediate shaft (120) can be disconnected from the load of the power take-off after a start of the power take-off, the clutch acting together with an input clutch layshaft (246).

4. Gearbox according to claim 1,
**characterised in that** the power take-off clutch (140; 240) comprises a three-position jaw in which the functions of the jaw clutch and an independent jaw (244) are combined, wherein the gearbox input clutch (118) and the intermediate shaft (120) can be disconnected from the load of the power take-off after a start of the power take-off by means of the independent jaw (244) and wherein this disconnection can only be effected by the independent jaw (244).

## Revendications

1. Transmission comportant une commande auxiliaire, un arbre d'entrée (116, 216), un arbre intermédiaire (120, 220), un arbre (124, 224) de transmission à changement de vitesses, un arbre de commande auxiliaire (130, 230), un embrayage (118, 218) d'entrée de la transmission, un embrayage intermédiaire (122, 222) et un embrayage (140, 240) de la commande auxiliaire, l'arbre intermédiaire (120, 220) pouvant être relié à l'arbre d'entrée (116, 216) au moyen de l'embrayage d'entrée de la transmission (118, 218) et l'arbre (124, 224) de transmission à changement de vitesses pouvant être relié à l'arbre intermédiaire (120, 220) au moyen de l'embrayage intermédiaire (122, 222), l'embrayage (140, 240) de la commande auxiliaire étant disposé dans le flux des moments , derrière l'embrayage (118, 218) d'entrée de transmission, **caractérisée en ce que** l'embrayage (140; 240) de la commande auxiliaire est conçue comme un embrayage à griffes, qui permet de relier directement un arbre creux (138, 238) à l'arbre intermédiaire (120, 220), l'arbre creux (138, 238) sert de logement ou de fixation d'une roue d'entrée (132, 232) de la commande auxiliaire.

2. Transmission selon la revendication 1, **caractérisée en ce que** l'embrayage de la commande auxiliaire présente une griffe indépendante (244) qui agit conjointement avec un arbre intermédiaire d'embrayage d'entrée (246).

3. Transmission selon la revendication 1, **caractérisée par** un embrayage qui est conçu comme une griffe indépendante (244) qui permet après un démarrage de la commande auxiliaire de libérer l'embrayage d'entrée de la transmission (218) et l'arbre intermédiaire (220) de la charge de la transmission auxiliaire, l'embrayage agissant conjointement avec un arbre auxiliaire d'embrayage d'entrée (246).

4. Transmission selon la revendication 1, **caractérisée en ce que** l'embrayage de la commande auxiliaire (140, 240) présente une griffe à trois positions qui réunit les fonctions de l'embrayage à griffes et d'une griffe indépendante (244), la griffe indépendante (244) après un démarrage de la commande auxiliaire permettant de libérer l'embrayage d'entrée de la transmission (218) et l'arbre intermédiaire (220) de la charge de la transmission auxiliaire et ladite libération pouvant être provoquée uniquement par la griffe indépendante (244).
